# EUROPÄISCHE PATENTANMELDUNG

(11) **EP 0 562 396 A1**
(43) Veröffentlichungstag der Anmeldung: **29.09.1993**
(21) Anmeldenummer: 93104107.3
(22) Anmeldetag: 13.03.1993
(51) Int. Cl.: C08J 9/14, C09K 3/30

(54) **Trifluormethan enthaltende Zusammensetzungen und deren Verwendung als Treibmittel**

(30) Priorität: 24.03.1992 DE 4209465
(71) Anmelder: Solvay Fluor und Derivate GmbH, D-30173 Hannover (DE)
(72) Erfinder: Krücke, Werner, W-3000 Hannover (DE); Moritz, Wilfried, W-3201 Sarstedt (DE)
(74) Vertreter: Lauer, Dieter, Dr.

(57) **Zusammenfassung**

Beschrieben werden Zusammensetzungen aus Trifluormethan und einem teilhalogenierten Kohlenwasserstoff aus der Gruppe Dichlortrifluorethan, Dichlorfluorethan, Chlordifluorethan und Difluorethan. Ebenfalls beschrieben wird deren Verwendung als Treibmittelzusammensetzungen.

## Beschreibung

Die Erfindung betrifft Trifluormethan enthaltende Zusammensetzungen sowie deren Verwendung als Treibmittel.

Der Einsatz von Fluorchlorkohlenwasserstoffen (FCKWs) als Aerosol-Treibmittel sowie als Treibmittel bei der Herstellung von Schaumstoffen ist aus ökologischen Gründen nicht mehr wünschenswert. Viele der bisher vorgeschlagenen Ersatzstoffe, wie z.B. Propan oder Butan, die als Aerosol-Treibmittel eingesetzt werden, haben den Nachteil, sehr leicht brennbar zu sein. Weitere Ersatzstoffe, die die herkömmlichen FCKWs bei der Herstellung von Schaumstoffen, insbesondere bei der Herstellung von Polyethylen-, Polyurethan- oder Polystyrol-Schaumstoffen, abgelöst haben, zeigen wie z.B. Kohlendioxid den Nachteil, daß die mit ihnen hergestellten Schaumstoffe eine noch unbefriedigende Wärmedämmung aufweisen.

Für die Herstellung von Extrusionsschaumstoffen sollte das eingesetzte Treibmittel eine Reihe von anwendungstechnische Anforderungen erfüllen. So sollte das Treibmittel in der Vormischung zur Herstellung des Schaumstoffes, dessen Viskosität nicht allzu stark verändern. Während der Expansion muß das Treibmittel eine hohe Verdampfungsgeschwindigkeit aufweisen, um die Restgaskonzentration gering zu halten. Auch darf keine Permeation auftreten, die ein Zusammenbrechen der Zellen vor dem Erstarren des Schaumstoffes zur Folge hätte. Auch sollte sich mit dem Treibmittel ein sehr feinzelliger Schaum von niedriger Dichte herstellen lassen, der sich aufgrund seines geringen Gewichtes beispielsweise sehr gut im Verpackungsbereich einsetzen läßt.

Insbesondere bereitet die Bereitstellung eines geeigneten Treibmittels, das die bisher verwendeten FCKWs bei der Verschäumung sogenannter Polyurethan-Einkomponentenschaumstoffe ersetzen kann, noch Probleme. Polyurethan-Einkomponentenschaumstoffe werden erhalten, wenn eine Polyolvormischung zusammen mit einem Überschuß an Di- und/oder Polyisocyanat in Gegenwart eines Katalysators und gegebenenfalls weiterer Hilfs- und Zusatzstoffe zu einem sogenannten Präpolymer umgesetzt wird, das mit Hilfe eines Treibmittels aus eine Druckbehälter abgegeben werden kann. Die meisten Präpolymeren für Polyurethan-Einkomponentenschaummischungen besitzen eine sehr hohe Viskosität, so daß das Treibmittel gute Lösungseigenschaften besitzen sollte, um somit das Präpolymer problemlos aus einem Aerosolbehälter heraus verschäumen zu können.

Die Aufgabe der Erfindung besteht darin, neue Treibmittelzusammensetzungen zur Verfügung zu stellen, die die bisherigen Nachteile des Standes der Technik überwinden. Überraschend wurde nun gefunden, daß Zusammensetzungen mit Trifluormethan mit einem teilhalogenierten Kohlenwasserstoff aus der Gruppe Dichlortrifluorethan, Dichlorfluorethan, Chlordifluorethan und Difluorethan sich als Treibmittelzusammensetzungen eignen.

Gegenstand der Erfindung sind daher Zusammensetzungen, die Trifluormethan und einen teilhalogenierten Kohlenwasserstoff aus der Gruppe Dichlortrifluorethan, Dichlorfluorethan, Chlordifluorethan und Difluorethan enthalten.

Unter Dichlortrifluorethan im Sinne der Erfindung werden 1,1-Dichlor-2,2,2-trifluorethan (= R123) und dessen isomeren Verbindungen 1,2-Dichlor-1,1,2-trifluorethan (= R123a) und 1,1-Dichlor-1,2,2-trifluorethan (= R123b) sowie deren Gemische verstanden. Unter Dichlorfluorethan werden im Sinne der Erfindung 2,3-Dichlor-1-fluorethan (R141), 1,1-Dichlor-2-fluorethan (R141a) und 1,1-Dichlor-1-fluorethan (R141b) sowie deren Gemische verstanden. Im Sinne der Erfindung werden unter Chlordifluorethan 1-Chlor-2,2-difluorethan (R142), 1-Chlor-1,2-difluorethan (R142a) und 1-Chlor-1,1-difluorethan (R142b) sowie deren Gemische verstanden. Unter Difluorethan im Sinne der Erfindung werden 1,2-Difluorethan (R152) und 1,1-Difluorethan (R152a) sowie deren Gemische verstanden.

Bevorzugt sind dabei Treibmittelzusammensetzungen, die Trifluorethan (R23) und aus der Gruppe der teilhalogenierten Kohlenwasserstoffe 1,1-Dichlor-1-fluorethan (R141b), 1-Chlor-1,1-difluorethan (R142b), 1,1-Dichlor-2,2,2-trifluorethan (R123) oder 1,1-Difluorethan (R152a) enthalten.

Zweckmäßigerweise enthalten die Treibmittelzusammensetzungen Trifluormethan (R23) in einer Menge von 5 bis 35 Gew.-%, vorzugsweise S bis 25 Gew.-%, und den teilhalogenierten Kohlenwasserstoff in einer Menge von 65 bis 95 Gew.-%. Bevorzugt sind Treibmittelzusammensetzungen, die Trifluormethan (R23) in einer Menge von 5 bis 25 Gew.-% und 1-Chlor-1,1-difluorethan (R142b) oder 1,1-Dichlor-1-fluorethan (R141b) in einer Menge von 75 bis 95 Gew.-% oder 1,1-Dichlor-2,2,2-trifluorethan (R123) in einer Menge von 65 bis 80 Gew.-% oder 1,1-Difluorethan (R152a) in einer Menge von 85 bis 95 Gew.-% enthalten. So eignen sich als Treibmittel für die Schaumkunststoffherstellung beispielsweise Gemische aus R23 und 75 bis 85 Gew.-% R142b. Als Treibmittel zur Aerosolerzeugung eignen sich beispielsweise Gemische aus R23 und 90 bis 95 Gew.-% R141b gut.

Es ist überraschend, daß Trifluormethan (R23) als Treibmittelkomponente einsetzbar ist. Trifluormethan (R23) hat einen Siedepunkt von -82 °C. Bei 20 °C besitzt reines Trifluormethan (R23) einen sehr hohen Dampfdruck von ca. 42 bis 43 bar. Diese physikalischen Werte von Trifluormethan (R23) liegen damit weit außerhalb der für Treibmittel üblichen Grenzen. Es war nicht vorhersehbar, daß der Dampfdruck von Trifluormethan sich in den erfindungsgemäßen Zusammensetzungen so weit herunterdrücken läßt, daß Trifluormethan (R23) in Treibmittelzusammensetzungen mit einem der vorgenannten teilhalogenierten Kohlenwasserstoffe verwendet werden kann. So ermöglicht es die vorliegende Erfindung, eine Treibmittelzusammensetzung mit niedrigen ODP (= Ozone Depleting Potential) und den bisher verwendeten FCKW gleichwertigen Treibmitteleigenschaften bereitzustellen. Ein besonderer Vorteil der erfindungsgemäßen Treibmittelzusammensetzungen ist darin zu sehen, daß z.B. beim Einsatz der erfindungsgemäßen Treibmittelzusammensetzungen in Druckbehältern zur Aerosolversprühung der gewünschte Treibdruck auch über die gesamte Gebrauchsdauer praktisch konstant gehalten werden kann.

Die erfindungsgemäßen Treibmittelzusammensetzungen aus Trifluormethan (R23) und Dichlorfluorethan, insbesondere 1,1-Dichlor-1-fluorethan (R141b), können auf allen Anwendungsgebieten, auf welchen FCKWs als Treibmittel verwendet wurden, eingesetzt werden. Die erfindungsgemäßen Treibmittelzusammensetzungen aus Trifluormethan (R23) und 1,1-Dichlor-1-fluorethan (R141b) können zur Erzeugung von Aerosolen beispielsweise bei Kosmetika, Pharmazeutika, Reinigungsmittel, Herbiziden, Insektiziden, Pestiziden, Farben und Lacken eingesetzt werden.

Mit den erfindungsgemäßen Treibmittelzusammensetzungen aus Trifluormethan (R23) und 1,1-Dichlor-1-fluorethan (R141b) können Aerosole aus flüssigen Zubereitungen der für den jeweiligen Anwendungszweck benötigten Wirkstoffe, beispielsweise Arzneistoffe, Kosmetika, Pestizide, Insektizide, Detergenzien oder Farbstoffe, erzeugt werden. Diese Zubereitungen können zur Aerosolversprühung an sich übliche Bestandteile wie Dispergiermittel oder Lösungsmittel, wie z.B. Wasser und organische Lösungsmittel, Hilfsdispergiermittel, wie oberflächenaktive Substanzen, Hilfsstoffe mit Füllwirkung, beispielsweise dispergiertes Siliciumdioxid, Hilfsstoffe zur Modifizierung der rheologischen Eigenschaften, wie beispielsweise Carboxymethylcellulose oder Polyvinylacetat, und Hilfsstoffe mit Bindemittelwirkung, wie z.B. Polyvinylpyrrolidon, enthalten.

Ein weiterer Gegenstand der Erfindung ist die Verwendung der erfindungsgemäßen Zusammensetzung als Treibmittel in Verfahren zur Erzeugung eines Aerosols einer zu versprühenden Flüssigkeit aus einem Druckbehälter. Erfindungsgemäß wird das Verfahren zur Erzeugung eines Aerosols einer zu versprühenden Flüssigkeit durchgeführt, indem man aus einem Druckbehälter, enthaltend die zu versprühende Flüssigkeit und eine erfindungsgemäße Treibmittelzusammensetzung, ein Aerosol durch Entspannen des im Druckbehälter herrschenden Überdruckes auf Atmosphärendruck über ein geeignetes Aerosolventil, z.B. einen Sprühaufsatz, erzeugt. Für die Verwendung der erfindungsgemäßen Zusammensetzung als Aerosoltreibmittel wird die erfindungsgemäße Treibmittelzusammensetzung zusammen mit der zu versprühenden Flüssigkeit in einen Druckbehälter, z.B. eine Aerosoldose, gegeben. Die Menge an Treibmittel wird zweckmäßig so gewählt, daß in dem Druckbehälter bei 50 °C sich ein Druck von ca. 10 bar einstellt. Als Treibmittel für Aerosoldosen eignen sich insbesondere Treibmittelzusammensetzungen, bestehend aus 5 bis 10 Gew.-% Trifluormethan (R23) und 90 bis 95 Gew.-% 1,1-Dichlor-1-fluorethan (R141b). Insbesondere setzt man Trifluormethan (R23) in einer Menge von 7,5 Gew.-% und 1,1-Dichlor-1-fluorethan (R141b) in einer Menge von 92,5 Gew.-% ein.

Ein weiterer Gegenstand der Erfindung ist die Verwendung der erfindungsgemäßen Zusammensetzung als Treibmittel in Verfahren zur Herstellung geschäumter Kunststoffe. Als besonders geeignet hierzu erweisen sich dabei Treibmittelzusammensetzungen, die 5 bis 25 Gew.-%, insbesondere 15 bis 25 Gew.-% Trifluormethan (R23) und 75 bis 95 Gew.-%, insbesondere 80 Gew.-% 1-Chlor-1,1-difluorethan (R142b) oder 5 bis 35 Gew.-%, vorzugsweise 20 bis 35 Gew.-%, Trifluormethan (R23) und 65 bis 95 Gew.-% 1,1-Dichlor-2,2,2-trifluorethan (R123) oder 5 bis 15 Gew.-% Trifluormethan (R23) und 85 bis 95 Gew.-% 1,1-Difluorethan (R152a) enthalten. Erfindungsgemäß wird das Verfahren durchgeführt, indem man in eine Schmelze der zur Herstellung geschäumter Kunststoffe geeigneten Ausgangsprodukte als Treibmittel Trifluormethan (R23) in einer Menge von 5 bis 35 Gew.-%, bezogen auf das Gesamttreibmittel, und einen teilhalogenierten Kohlenwasserstoff aus der Gruppe Dichlortrifluorethan, Dichlorfluorethan, Chlordifluorethan und Difluorethan in einer Menge von 65 bis 95 Gew.-%, bezogen auf das Gesamttreibmittel, einzeln oder im Gemisch gegebenenfalls unter Druck zumischt und die Polymerisation der Ausgangsprodukte für den herzustellenden geschäumten Kunststoff gegebenenfalls unter Aufrechterhalten eines schwachen Über- oder Unterdruckes während des Aufschäumvorganges durchführt. Die Zumischung des Treibmittels kann dabei auf an sich bekannte Weise erfolgen.

In einer bevorzugten Variante wird das Verfahren zur Herstellung von Schaumstoffen unter Verwendung der erfindungsgemäßen Treibmittelzusammensetzung als Extrusionsverfahren durchgeführt. Hierbei werden für die Herstellung von Schaumstoffen geeignete Mischungen direkt zu geschäumten Platten, Folien, Formkörpern, Profilen oder Partikeln extrudiert. Die durch die Extrusion erhaltenen Produkte besitzen als sogenannte leichte Schaumstoffe eine sehr dünne Außenhaut und eine niedrige Dichte. Besonders bevorzugt werden nach diesem Verfahren Polyethylen- oder Polystyrolschaumstoffe hergestellt. Beispiele für extrudierte Polystyrolschaumstoffe, die mit einer erfindungsgemäßen Treibmittelzusammensetzung hergestellt werden können, sind z.B. Polystyrol-Schaumfolien, Polystyrol-Schaumplatten oder Polystyrol-Integralschäume. Beispiele für extrudierte Polyethylenschaumstoffe sind z.B. Polyethylen-Platten, Polyethylen-Bahnen oder Polylethylen-Schaumrohre, wie sie zur Dämmung von Rohren verwendet werden.

Die erfindungsgemäß unter dem Einsatz einer erfindungsgemäßen Treibmittelzusammensetzung ausgeführte Extrusion von Schaumstoffen, insbesondere von Polystyrol- oder Polyethylenschaumstoffen, kann auf an sich bekannten Extruderanlagen durchgeführt werden. Den hierfür verwendeten für die Herstellung von Schaumstoffen geeigneten Mischungen können dabei zusätzlich zu den Polymeren und/oder polymerisierbaren Bestandteilen an sich bekannte Zusatz- und/oder Hilfsstoffe, beispielsweise Nuklisierungsmittel, Porenreglersubstanzen, Flammschutzmittel, Antistatika, Stabilisatoren, Weichmacher, Vernetzungsmittel, Füllstoffe oder Farbstoffe, beigefügt sein. Die mit der erfindungsgemäßen Treibmittelzusammensetzung hergestellten geschlossenzelligen Schaumstoffe zeichnen sich durch eine sehr gleichmäßige feinzellige Struktur aus. Auch besitzen die erhaltenen geschäumten Kunststoffe ein sehr niedriges Raumgewicht mit überraschend hoher mechanischer Stabilität und Druckfestigkeit. Die so erhaltenen geschlossenzelligen Schaumstoffe besitzen typischerweise eine Dichte im Bereich von 25 bis ca. 320 kg/m³. So besitzen mit der erfindungsgemäßen Treibmittelzusammensetzung Trifluormethan (R23) und 1-Chlor-1,1-difluorethan (R142b) hergestellte Polystyrol-Schaumplatten beispielsweise eine Dichte von ca. 30 kg/m³, Polystyrol-Schaumfolien eine Dichte von ca. 35 kg/m³. Weiter zeichnen sich die mit der erfindungsgemäßen Treibmittelzusammensetzung erhaltenen Schaumstoffe durch ein hohes Wärmeisolierungsvermögen aus.

In einer weiteren bevorzugten Variante der Erfindung werden die erfindungsgemäßen Treibmittelzusammensetzungen für die Herstellung von Polyurethan-Einkomponentenschaumstoffen zur Anwendung aus einem Druckbehälter eingesetzt. Polyurethan-Einkomponentenschaumstoffe entstehen, wenn man ein Polyol oder Polyolgemisch in Gegenwart eines Katalysators mit einem Überschuß an Di- und/oder Polyisocyanat zu einem Präpolymer umsetzt, gegebenenfalls unter Zusatz eines Stabilisators und/oder Flammschutzmittels. Dies kann direkt in einem Druckbehälter, z.B. einer Aerosoldose, mit nachfolgender Beaufschlagung mit einem Treibmittel erfolgen. Zur Anwendung wird das Präpolymer mit Hilfe des Treibmittels aus dem Druckbehälter herausgetrieben, wodurch der Einkomponenten-Polyurethanschaum erhalten wird. Erfindungsgemäß wird zur Herstellung eines Polyurethan-Einkomponentenschaumstoffes aus einem Druckbehälter, enthaltend eine Polyurethanschaummischung aus einer Polyolkomponente, einer Polyisocyanatkomponente, einem Katalysator und gegebenenfalls weiteren üblichen Hilfsstoffen sowie einer erfindungsgemäßen Treibmittelzusammensetzung, ein Polyurethan-Einkomponentenschaumnstoff durch Entspannen des im Druckbehälter herrschenden Überdruckes auf Atmosphärendruck über ein geeignetes Ventil erzeugt. Als sehr vorteilhaft zur Herstellung eines Polyurethan-Einkomponentenschaumstoffes zur Anwendung aus einem Druckbehälter erweist sich der Einsatz einer erfindungsgemäßen Treibmittelzusammensetzung aus Trifluormethan (R23) in einer Menge von 10 bis 30 Gew.-% und 1-Chlor-1,1-difluorethan (R142b) oder 1,1-Dichlor-2,2,2-trifluorethan (R123) oder 1,1-Difluorethan (R152a) in einer Menge von 70 bis 90 Gew.-%. In der zu verschäumenden Polyurethan-Einkomponentenschaumstoffmischung können dabei auf an sich bekannte Weise eine Polyolkomponente, eine Polyisocyanatkomponente, ein Katalysator sowie gegebenenfalls noch als Hilfsstoff ein Flammschutzmittel als weitere Bestandteile neben der erfindungsgemäßen Treibmittelzusammensetzung enthalten sein. Als Polyolkomponente können z.B. Polyetherpolyole, die als Additionsprodukte von Propylenoxid oder Ethylenoxid an mehrwertige Alkohole, Wasser oder Ethylendiamin erhalten wurden, oder Polyesterpolyole, die als Polykondensationsprodukte aus Polyolen mit Dicarbonsäuren oder deren Anhydriden erhalten wurden, oder Gemische derselben in der Polyurethan-Einkomponentenschaummischung enthalten sein. Eine typische Polyolkomponente kann z.B. ein Gemisch aus einem bromierten Polyetherpolyol (beispielsweise Diol oder Triol) mit einer Hydroxylzahl von 200 bis 350 und einem Polyetherpolyol (z.B. einem Diol) mit einer Hydroxylzahl von 110 sein.

Als Polyisocyanatkomponente können zum Beispiel Diphenylmethan-4,4'-diisocyanat, Diisocyanato-toluol, 1,5-Diisocyanatonaphthalin, Triisocyanato-triphenylmethan, 1,6-Diisocyanatohexan, vorzugsweise Diphenylmethan-4,4'-Diisocyanat, oder Gemische davon, eingesetzt werden.

Typische Katalysatoren in Polyurethan-Einkomponentenschaummischungen, die im erfindungsgemäßen Verfahren mit der erfindungsgemäßen Treibmittelzusammensetzung aus Trifluormethan (R23) und 1-Chlor-1,1-difluorethan (R142b) verschäumt werden können, sind organische Amine, Aminoalkohole oder Aminoether, z.B. 2-Dimethylaminoethyl-3-Dimethylaminopropylether, Diethanolamin, Dimethylcyclohexylamin, 2-Dimethylaminoethylether, oder Morpholinverbindungen, wie z.B. 2,2-Dimorpholinodiethylether, N,N-Dimethylaminoethylmorpholin, N-Methylmorpholin. Bevorzugt sind die Morpholinverbindungen, insbesondere 2,2-Dimorpholinodiethylether.

Als übliche Flammschutzmittel können Tris-chlorisopropylphosphat, Tris-chlorethylphosphat, Trichlorpropylphosphat, Dimethylenethylphosphat, Tris-dichlorisopropylphosphat, vorzugsweise Trichlorpropylphosphat, eingesetzt werden.

Als Stabilisatoren sind Copolymere aus Siloxan geeignet.

Die erfindunsgsgemäßen Treibmittelzusammensetzungen besitzen ein sehr gutes Lösungsvermögen für Polyurethan-Einkomponentenschaummischungen, was für die Verarbeitung der Polyurethan-Einkomponentenschaummischung, beispielsweise für den Vorgang des Aufschüttelns und der Schäumung, besonders vorteilhaft ist.

Eine zu verschäumende Polyurethan-Einkomponentenschaummischung enthält zweckmäßigerweise 20 bis 30 Gew.-% eine Polyolkomponente, 40 bis 60 Gew.-% einer Polyisocyanatkomponente, 0,1 bis 3 Gew.-% Katalysator, gegebenenfalls 10 bis 15 Gew.-% eines Flammschutzmittels, gegebenenfalls 1 bis 2 Gew.-% Schaumstabilisator neben 15 bis 25 Gew.-% einer erfindungsgemäßen Treibmittelzusammensetzung. Eine typische Polyurethan-Einkomponentenschaummischung, die sich vorteilhaft mit Hilfe der erfindungsgemäßen Treibmittelzusammensetzung verschäumen läßt, besteht so beispielsweise aus ca. 22,5 Gew.-% einer Polyolkomponente, z.B. aus einem Gemisch eines bromierten Polyetherpolyols mit einer Hydroxylzahl von 200 bis 350 und einem Polyetherpolyol mit einer Hydroxylzahl von 110 im Mischungsverhältnis 1:1, ca. 42,5 Gew.-% einer Polyisocyanatkomponente, z.B. Diphenylmethan-4,4'-diisocyanat, ca. 0,5 Gew.-% einer Katalysatorsubstanz wie z.B. 2,2-Dimorpholinodiethylether, ca. 1,5 Gew.-% Silikonschaumstabilisator, ca. 13 Gew.-% eines Flammschutzmittels wie z.B. Trichlorpropylphosphat, und einem Anteil von ca. 20 Gew.-% an einer erfindungsgemäßen Treibmittelzusammensetzung. Aus einer derartigen Polyurethan-Einkomponentenschaummischung kann ein Einkomponentenschaumstoff mit einer gleichmäßigen feinzelligen Struktur und niedriger Rohdichte, z.B. mit einer Rohdichte von ca. 25 kg/m³ hergestellt werden. Aufgrund des guten Wärmeisolierungsvermögens eignet sich ein erfindungsgemäß hergestellter Polyurethan-Einkomponentenschaumstoff gut für den Montagebereich, z.B. im Bau- und Wohnbereich.

Vorteile bei Verwendung der erfindungsgemäßen Treibmittelzusammensetzungen sind darin zu sehen, daß sie z.B. als Treibmittel in Aerosoldruckgaspackungen eine gleichmäßige Zerstäubung des jeweiligen Wirkstoffes ergeben, wobei auch bei zunehmender Entleerung der Aerosoldose der Anfangsdruck weitgehend beibehalten wird. Die erfindungsgemäßen Treibmittelzusammensetzungen lassen sich leicht druckverflüssigen und zeigen dabei ein gutes Lösungsvermögen für polymerisierbare Werkstoffe, was insbesondere für ihre Anwendung als Treibmittel zur Herstellung geschäumter Kunststoffe, insbesondere zur Extrusion von Polyethylen- oder Polystyrolschaumstoffen sowie als Treibmittel für die Herstellung eines Polyurethan-Einkomponentenschaumstoffes zur Anwendung aus einem Druckbehälter von Vorteil ist. Somit lassen sich mit den erfindungsgemäßen Treibmittelzusammensetzungen geschäumte Kunststoffe mit einer sehr gleichmäßigen feinzelligen Porenstruktur und geringen Raumdichte herstellen, die eine hohe Druckfestigkeit und ein gutes Wärmedämmvermögen aufweisen.

Die nachfolgenden Beispiele sollen die Erfindung näher erläutern, ohne sie jedoch in ihrem Umfang zu begrenzen.

### Beispiele

### 1. Zusammensetzung aus R23 und R141b als Aerosoltreibmittel (Propellant)

Eine Mischung aus 300 Gewichtsteilen Farbstofflösung und 60 Gewichtsteilen einer Treibmittelzusammensetzung, bestehend aus 7,5 Gew.-% R23 und 92,5 Gew.-% (R141b), wurde über eine handelsübliche Aerosolabfüllvorrichtung in eine Aerosoldruckdose aus Aluminium injiziert. Anschließend wurde die Aerosoldose mit einem Aerosolventil versehen. Das Volumen der Aerosoldose betrug 400 cm³. Bei 50 °C wurde innerhalb der Dose ein Druck von ca. 10 bar gemessen.

Beim Zerstäuben der Zusammensetzung wurde ein Sprühbild mit gleichmäßiger Zerstäubung der Farbstofflösung erzielt. Auch bei zunehmender Entleerung wurde dabei keine merkliche Abnahme des Anfangsdruckes festgestellt. Die Dose konnte völlig entleert werden.

### 2. Herstellung eines Polystyrolschaumstoffes unter Verwendung einer Treibmittelzusammensetzung aus R23 und R142b

Es wurden 200 kg Polystyrol (Schmelzindex 3,0 - 110) mit 2 kg Talkum als Nuklisierungsmittel vermischt. Die Mischung wurde in eine übliche Extruderanlage eindosiert und aufgeschmolzen. In der Schmelzzone des Extruders wurden über eine Einspritzdüse in die Polystyrolschmelze ca. 8 Gew.-% eines Treibmittels, bezogen auf Polystyrol, eindosiert. Als Treibmittel wurde eine erfindungsgemäße Treibmittelzusammensetzung eingesetzt, die sich aus 20 Gewichtsteilen R23 und 80 Gewichtsteilen R142b zusammensetzte. In der Mischzone wurde die Polystyrolschmelze mit der erfindungsgemäßen Treibmittelzusammensetzung homogen vermischt und anschließend die erhaltene Mischung über eine Düse extrudiert. Es wurde ein geschlossenzelliger Schaumstoff von gleichmäßiger, feinzelliger Struktur erhalten. Je nach Vorrichtung an der Extruderanlage konnte dabei der Polystyrolschaumstoff als Schaumfolie oder als Schaumplatte gefertigt werden. Eine so gefertigte Polystyrol-Schaumfolie zeigte eine Dichte von ca. 35 kg/m³ mit guten Nachschäumeigenschaften. Eine so hergestellte Polystyrolschaumplatte besaß eine Dichte von ca. 30 kg/m³.

### 3. Herstellung eines Polvethylenschaumstoffes unter Verwendung einer Treibmittelzusammensetzung aus R23 und R142b

200 kg Polyethylen (Schmelzindex 3,5 - 150) wurden nach dem in Beispiel 2 beschriebenen Verfahren extrudiert. Der Versuch wurde unter den im Beispiel 2 beschriebenen Bedingungen mit einer erfindungsgemäßen Treibmittelzusammensetzung aus R23 und R142b durchgeführt. Die Mengen entsprachen den Mengenangaben in Beispiel 2. Es wurde ein Polyethylen-Schaumrohr, wie es für die Rohrisolation verwendbar ist, mit einer Dichte von ca. 40 kg/m³ hergestellt. Man erhielt einen feinzelligen Polyethylenschaumstoff mit einer Schrumpfung von ca. 5 %.

### 4. Verwendung einer Treibmittelzusammensetzung aus R23 und R142b als Treibmittel für Polyurethan-Einkomponentenschaumstoffe

Eine Polyolvormischung, bestehend aus
50 g Polyetherpolyol (Triol), bromiert, Hydroxylzahl 330
50 g Polyetherpolyol (Diol), Hydroxylzahl 110
60 g Trichlorpropylphosphat
5 g Siliconschaumstabilisator
3 g Dimorpholindiethylether,
wurden in eine Aerosoldose aus Aluminium mit einem Volumen von 1000 cm³ eingefüllt. Es wurden 190 g Diphenylmethan-4,4'-diisocyanat zugegeben und die Aerosoldose mit einem Schaumaerosolventil verschlossen. Anschließend wurden 90 g einer erfindungsgemäßen Treibmittelzusammensetzung, bestehend aus 20 Gew.-% R23 (entsprechend 18 g) und 80 Gew.-% R142b (entsprechend 72 g), über eine übliche Aerosolabfüllvorrichtung in die Dose injiziert. Der Behälter wurde kurzfristig geschüttelt und für ca. 24 Stunden zur Ausbildung des Präpolymers stehengelassen. Nach Ablauf dieser Zeit war die Polyurethan-Einkomponentenschaummischung zur Anwendung gebrauchsfertig.

Die Polyurethan-Einkomponentenschaummischung wurde mittels der erfindungsgemäßen Treibmittelzusammensetzung aus der Aerosoldose ausgetrieben. Man erhielt einen Polyurethan-Einkomponentenschaumstoff mit einer Rohdichte von ca. 25 kg/m³ von gleichmäßiger, feinzelliger Struktur. Die Schrumpfung des Polyurethan-Einkomponentenschaumstoffes nach einer Lagerung von 7 Tagen bei einer Luftfeuchtigkeit von ca. 90 % betrug im Mittel ca. 5 Längenprozent.

### 5. Verwendung einer Treibmittelzusammensetzung aus R23 und R123 als Treibmittel für Polyurethan-Einkomponentenschaumstoffe

Es wurde verfahren wie in Beispiel 4 beschrieben, wobei als Treibmittel 90 g einer erfindungsgemäßen Treibmittelzusammensetzung, bestehend aus 30 Gew.-% R23 und 70 Gew.-% R123, eingesetzt werden.

### 6. Verwendung einer Treibmittelzusammensetzung aus R23 und R152a als Treibmittel für Polyurethan-Einkomponentenschaumstoffe

Es wurde verfahren wie in Beispiel 4 beschrieben, wobei als Treibmittel 90 g einer erfindungsgemäßen Treibmittelzusammensetzung, bestehend aus 10 Gew.-% R23 und 90 Gew.-% R152a, eingesetzt wurden.

## Patentansprüche

1. Treibmittelzusammensetzungen, dadurch gekennzeichnet, daß sie Trifluormethan und einen teilhalogenierten Kohlenwasserstoff aus der Gruppe Dichlortrifluorethan, Dichlorfluorethan, Chlordifluorethan und Difluorethan enthalten.

2. Treibmittelzusammensetzungen nach Anspruch 1, dadurch gekennzeichnet, daß sie Trifluormethan in einer Menge von 5 bis 35 Gew.-% und einen teilhalogenierten Kohlenwasserstoff aus der Gruppe Dichlortrifluorethan, Dichlorfluorethan, Chlordifluorethan und Difluorethan in einer Menge von 65 bis 95 Gew.-% enthalten.

3. Treibmittelzusammensetzungen nach Anspruch 2, dadurch gekennzeichnet, daß sie als teilhalogenierten Kohlenwasserstoff Dichlorfluorethan, insbesondere 1,1-Dichlor-1-fluorethan (R141b), oder Chlordifluorethan, insbesondere 1-Chlor-1,1-difluorethan (R142b), in einer Menge von 75 bis 95 Gew.-% enthalten.

4. Treibmittelzusammensetzungen nach Anspruch 2, dadurch gekennzeichnet, daß sie als teilhalogenierten Kohlenwasserstoff Dichlortrifluorethan, insbesondere 1,1-Dichlor-2,2,2-trifluorethan (R123), in einer Menge von 65 bis 80 Gew.-% enthalten.

5. Treibmittelzusammensetzungen nach Anspruch 2, dadurch gekennzeichnet, daß sie als teilhalogenierten Kohlenwasserstoff Difluorethan, insbesondere 1,1-Difluorethan (R152a), in einer Menge von 85 bis 95 Gew.-% enthalten.

6. Verwendung einer Treibmittelzusammensetzung gemäß Anspruch 1 zur Erzeugung eines Aerosols einer zu versprühenden Flüssigkeit.

7. Verwendung nach Anspruch 6, dadurch gekennzeichnet, daß man als Treibmittelzusammensetzung eine Zusammensetzung, aus 5 bis 10 Gew.-% Trifluormethan (R23) und 90 bis 95 Gew.-% 1,1-Dichlor-1-fluorethan (R141b), verwendet.

8. Verfahren zur Erzeugung eines Aerosols einer zu versprühenden Flüssigkeit, dadurch gekennzeichnet, daß man aus einem Druckbehälter, enthaltend die zu versprühende Flüssigkeit und eine Treibmittelzusammensetzung aus 5 bis 10 Gew.-% Trifluormethan (R23) und 90 bis 95 Gew.-% 1,1-Dichlor-1-fluorethan (R141b), ein Aerosol durch Entspannen des im Druckbehälter herrschenden Überdruckes auf Atmosphärendruck über ein geeignetes Aerosolventil erzeugt.

9. Verwendung einer Treibmittelzusammensetzung gemäß Anspruch 1 als Treibmittel zur Herstellung von geschäumten Kunststoffen.

10. Verwendung nach Anspruch 9, dadurch gekennzeichnet, daß man als Treibmittel eine Treibmittelzusammensetzung, bestehend aus 5 bis 25 Gew.-%, vorzugsweise 15 bis 25 Gew.-%, Trifluormethan (R23) und 75 bis 95 Gew.-% 1-Chlor-1,1-difluorethan (R142b), einsetzt.

11. Verwendung nach Anspruch 9, dadurch gekennzeichnet, daß man als Treibmittel eine Treibmittelzusammensetzung, bestehend aus 5 bis 35 Gew.-%, vorzugsweise 20 bis 35 Gew.-%, Trifluormethan (R23) und 65 bis 95 Gew.-% 1,1-Dichlor-2,2,2-trifluorethan (R123) einsetzt.

12. Verwendung nach Anspruch 9, dadurch gekennzeichnet, daß man als Treibmittel eine Treibmittelzusammensetzung, bestehend aus 5 bis 15 Gew.-% Trifluormethan (R23) und 85 bis 95 Gew.-% 1,1-Difluorethan (R152a) einsetzt.

13. Verfahren zur Herstellung von geschäumten Kunststoffen, dadurch gekennzeichnet, daß man in eine Schmelze der zur Herstellung geschäumter Kunststoffe geeigneten Ausgangsprodukte als Treibmittel Trifluormethan (R23) in einer Menge von 5 bis 35 Gew.-%, bezogen auf das Gesamttreibmittel, und einen teilhalogenierten Kohlenwasserstoff aus der Gruppe Dichlortrifluorethan, Dichlorfluorethan, Chlordifluorethan und Difluorethan in einer Menge von 65 bis 95 Gew.-%, bezogen auf das Gesamttreibmittel, einzeln oder im Gemisch, gegebenenfalls unter Druck zumischt und die Polymerisation der Ausgangsprodukte für den herzustellenden geschäumten Kunststoff gegebenenfalls unter Aufrechterhalten eines schwachen Über- oder Unterdruckes während des Aufschäumvorganges durchführt.

14. Verfahren nach Anspruch 13, dadurch gekennzeichnet, daß man das Verfahren als Extrusionsverfahren durchführt.

15. Verfahren nach Anspruch 14, dadurch gekennzeichnet, daß man in dem Verfahren geeignete Ausgangsprodukte zur Herstellung von Polyethylen- oder Polystyrolschaumstoffen einsetzt.

16. Verfahren zur Herstellung eines Polyurethan-Einkomponentenschaumstoffes, dadurch gekennzeichnet, daß man aus einem Druckbehälter, enthaltend eine Polyurethan-Einkomponentenschaummischung aus einer Polyolkomponente, einer Polyisocyanatkomponente, einem Katalysator und gegebenenfalls weiteren üblichen Hilfsstoffen sowie als Treibmittel Trifluormethan und einen teilhalogenierten Kohlenwasserstoff aus der Gruppe Dichlortrifluorethan, Dichlorfluorethan, Chlordifluorethan, und Difluorethan, einen Polyurethan-Einkomponentenschaumstoff durch Entspannen des im Druckbehälter herrschenden Überdruckes auf Atmosphärendruck über ein geeignetes Ventil erzeugt.

17. Polyurethan-Einkomponentenschaummischung, enthaltend eine Polyolkomponente und eine Polyisocyanatkomponente sowie einen Katalysator, ein Treibmittel und gegebenenfalls weitere übliche Hilfsstoffe, dadurch gekennzeichnet, daß sie als Treibmittel eine Treibmittelzusammensetzung gemäß Anspruch 1 enthält.

18. Polyurethan-Einkomponentenschaummischung gemäß Anspruch 17, dadurch gekennzeichnet, daß sie als Treibmittel Trifluormethan (R23) in einer Menge von 10 bis 30 Gew.-% und 1-Chlor-1,1-fluorethan (R142b) oder 1,1-Dichlor-2,2,2-trifluorethan (R123) oder 1,1-Difluorethan (R152a) in einer Menge von 70 bis 90 Gew.-% enthält.
